# EUROPÄISCHE PATENTSCHRIFT

(11) **EP 1 096 125 B1**
(45) Veröffentlichungstag und Bekanntmachung des Hinweises auf die Patenterteilung: **30.03.2005**
(21) Anmeldenummer: 00122696.8
(22) Anmeldetag: 18.10.2000
(51) Int. Cl.: F02D 41/02, F01N 3/08, F01N 11/00, F02D 41/14

(54) **Verfahren zur Steuerung des Betriebs eines NOx-Speicherkatalysators**
Method for controlling the operation of a NOx storage catalytic converter
Méthode de commande du fonctionnement d'un catalyseur de stockage de NOx

(30) Priorität: 26.10.1999 DE 19951544
(43) Veröffentlichungstag der Anmeldung: 02.05.2001
(73) Patentinhaber: SIEMENS AKTIENGESELLSCHAFT, 80333 München (DE)
(72) Erfinder: Ludwig, Wolgang, 55278 Dolgesheim (DE); Pfleger, Corinna, 93093 Donaustauf (DE); Zhang, Hong, Dr., 93105 Tegernheim (DE)

(56) Entgegenhaltungen:
- EP-A- 0 597 106
- EP-A- 0 735 250
- EP-A- 0 814 248
- WO-A-99/61770
- DE-C- 19 543 219

## Beschreibung

Die Erfindung betrifft ein Verfahren zur Steuerung des Betriebs eines NOx-Speicherkatalysators.

Um den Kraftstoffverbrauch von Otto-Brennkraftmaschinen weiter zu reduzieren, kommen Brennkraftmaschinen mit magerer Verbrennung immer häufiger zum Einsatz. Bei Otto-Brennkraftmaschinen mit magerer Verbrennung wird der Luftüberschuß so groß gewählt, wie es die Lastanforderung an die Brennkraftmaschine gestattet. Bei geringer Lastanforderung, z.B. bei geringem Drehmoment oder geringer bzw. fehlender Beschleunigung, kann in einem Schichtlade-Betrieb das Kraftstoff/Luft-Gemisch, mit dem die Brennkraftmaschine betrieben wird, Lambda-Werte von 3 und mehr aufweisen.

Zur Erfüllung der geforderten Abgasemissionsgrenzwerte ist bei solchen Brennkraftmaschinen eine spezielle Abgasnachbehandlung notwendig. Dazu werden NOx-Speicherkatalysatoren verwendet. Diese NOx-Speicherkatalysatoren sind aufgrund ihrer Beschichtung in der Lage, NOx-Verbindungen aus dem Abgas, die bei magerer Verbrennung entstehen, in einer Speicherphase zu adsorbieren. Während einer Regenerationsphase werden die adsorbierten bzw. gespeicherten NOx-Verbindungen unter Zugabe eines Reduktionsmittels in unschädliche Verbindungen umgewandelt. Als Reduktionsmittel für magerbetriebene Otto-Brennkraftmaschinen können CO, H₂ und HC (Kohlenwasserstoffe) verwendet werden. Diese werden durch kurzzeitiges Betreiben der Brennkraftmaschine mit einem fetten Gemisch erzeugt und dem NOx-Speicherkatalysator als Abgaskomponenten zur Verfügung gestellt, wodurch die gespeicherten NOx-Verbindungen im Katalysator abgebaut werden.
Um die Dauer der Speicherphasen, d.h. der Magerphasen, und der Regenerationsphasen, d.h. der Fettphasen, zu optimieren, wird die NOx-Beladung des Speicherkatalysators modelliert. Ein solches Verfahren ist beispielsweise aus der EP 0 597 106 A1 bekannt. Dabei wird die Speicherkapazität des NOx-Speicherkatalysators durch ein Modell berechnet. Die Steuerung des Betriebes mittels Berücksichtigung der Speicherkapazität des NOx-Speicherkatalysators hat den Vorteil, daß eine Verschlechterung des NOx-Speicherkatalysators, beispielsweise durch Alterung, im Betrieb erkannt werden kann, und man mit der Steuerung geeignet darauf reagieren kann. Allerdings sind die erforderlichen Modellrechnungen relativ aufwendig und ungenau.

Alternativ ist es aus der DE 195 43 219 C1 bekannt, bei Erreichen einer vorbestimmten NOx-Konzentration stromab des NOx-Speicherkatalysators eine Regenerationsphase anzufordern. Der dazu gesetzte Schwellenwert für die NOx-Konzentration wird betriebspunktabhängig gewählt, d.h. in Abhängigkeit von Drehzahl, Last und Einspritzmenge der Brennkraftmaschine. Dieser Schwellenwert stellt einen Maximalwert für unerwünschten Schlupf an NOx und damit für den Beladungsgrad des NOx-Speicherkatalysators dar. Da der Schlupf mit der Drehzahl, der Last bzw. der Einspritzmenge steigt, wird nach diesem Verfahren der Schwellenwert betriebspunktabhängig gewählt. Eine Information über die Speicherkapazität kann mit diesem Verfahren jedoch nicht gewonnen werden.

Es ist somit Aufgabe der vorliegenden Erfindung, ein Verfahren zur Steuerung des Betriebs eines NOx-Speicherkatalysators anzugeben, bei dem eine Speicherkapazität des NOx-Speicherkatalysators Verwendung findet, aber dennoch der Modellierungsaufwand reduziert ist.

Diese Aufgabe wird durch die Merkmale des Anspruchs 1 gelöst.

Erfindungsgemäß werden Regenerationsphasen abhängig von einer Abgaskomponentenkonzentration stromab des NOx-Speicherkatalysators beendet, wobei als Abgaskomponentenkonzentration der Lambda-Wert erfaßt werden kann. Die Regenerationsmittelmenge, die während einer Regenerationsphase zugeführt wird, bis die Abgaskomponentenkonzentration einen Schwellenwert überschreitet, wird bestimmt, und in eine Gesamtspeichermenge umgesetzt. Ein normaler NOx-Speicherkatalysator speichert neben NOx aber auch Sauerstoff. Jedoch ist der Sauerstoffmassenstrom im Abgas im Magerbetrieb wesentlich größer als der NOx-Massenstrom, so daß eine Sättigung der Sauerstoffspeicherkapazität bereits nach wenigen Sekunden eintritt. Es kann deshalb davon ausgegangen werden, daß am Ende einer Speicherphase die Sauerstoffspeicherkapazität immer vollständig ausgenutzt ist. Von der Gesamtspeichermenge wird deshalb eine Sauerstoffspeichermenge abgezogen, so daß man eine NOx-Nutzspeicherkapazität erhält.

Diese NOx-Nutzspeicherkapazität entspricht nicht der vollen Speicherkapazität des NOx-Speicherkatalysators, da während der Regeneration zunächst die einfach zu erreichenden Speicherpartikel an der Oberfläche des NOx-Speicherkatalysators regeneriert werden. Die an tiefer liegenden Speicherpartikeln gespeicherten NOx-Verbindungen sind nur mit relativ großem Aufwand an Reduktionsmittel und damit verbundenem Reduktionsmittelschlupf regenerierbar. Durch Wahl des Schwellenwerts für die Beendigung der Ermittlung der Regenerationsmittelmenge kann man sicherstellen, daß die gesamte Oberfläche des NOx-Speicherkatalysators regeneriert wurde.

Hierzu ist allerdings anzumerken, daß physikalisch gesehen keine scharfe Trennung zwischen Oberfläche und Tiefe vorgenommen werden kann, da das Einspeichern ein kontinuierlicher Prozeß ist. Auch ist die Einspeichertiefe nicht über die Katalysatorlängsachse konstant; während in stromab gelegenen Bereichen die Oberfläche noch nicht gesättigt ist, wird in den stromauf gelegenen Bereichen schon in der Tiefe eingespeichert. Die vorliegende Erfindung trifft nun eine definierbare Trennung zwischen Oberfläche und Tiefe dahingehend, daß die Abgaskomponentenkonzentration stromab des NOx-Speicherkatalysators während der Regenerationsphase als Maß dafür genommen wird, inwieweit schon in der Tiefe gespeicherte NOx-Verbindungen regeneriert werden. Die somit über einen Schwellenwert der Abgaskomponentenkonzentration definierte NOx-Nutzspeicherkapazität wird dann als Bezugsgröße für die Ermittlung der Beladung des NOx-Speicherkatalysators herangezogen. Diese Größe ist im Fahrzeugeinsatz leicht überprüfund damit adaptierbar, was von den nach dem Stande der Technik bekannten Modellierungen nicht gesagt werden kann.

In einer für die Adaption der NOx-Nutzspeicherkapazität heranzuziehenden Speicherphase muß lediglich dafür Sorge getragen werden, daß die Beladung über die zuletzt berechnete, dem aktuellen Katalysator-Betriebspunkt entsprechende NOx-Nutzspeicherkapazität hinaus erfolgt. Die Modellierung der Einspeicherung während der Speicherphase kann somit sehr viel ungenauer ausfallen, da sie in die Genauigkeit der Bestimmung der NOx-Nutzspeicherkapazität nicht eingeht. Die bisher übliche Kapazitätsbestimmung durch Abgleichung an einem Modell wird mithin durch eine Messung ersetzt.

Optional bietet sich mit dem erfindungsgemäßen Verfahren die Möglichkeit, eine Modellberechnung der Speicherkapazität über die Messung der NOx-Nutzspeicherkapazität zu korrigieren bzw. zu überprüfen, indem man eine modellbasierte Speicherphase durchführt, die den NOx-Speicherkapazität bis knapp über der zuletzt gemessenen NOx-Nutzspeicherkapazität belädt. Aus der nachfolgenden Regenerationsphase kann man dann feststellen, ob die modellberechnete Speicherkapazität mit der gemessenen NOx-Nutzspeicherkapazität übereinstimmt.

Vorteilhafte Ausgestaltungen der Erfindung sind in den Unteransprüchen gekennzeichnet.

Die Erfindung wird nachfolgend unter Bezugnahme auf die Zeichnung in einem Ausführungsbeispiel näher erläutert. In der Zeichnung zeigt:
Fig. 1 ein Blockschaltbild einer Brennkraftmaschine mit NOx-Speicherkatalysator,
Fig. 2 ein Diagramm zur Veranschaulichung der NOx-Nutzspeicherkapazität und
Fig. 3 ein Flußdiagramm zur Durchführung des Verfahrens zur Steuerung des Betriebs eines NOx-Speicherkatalysators.

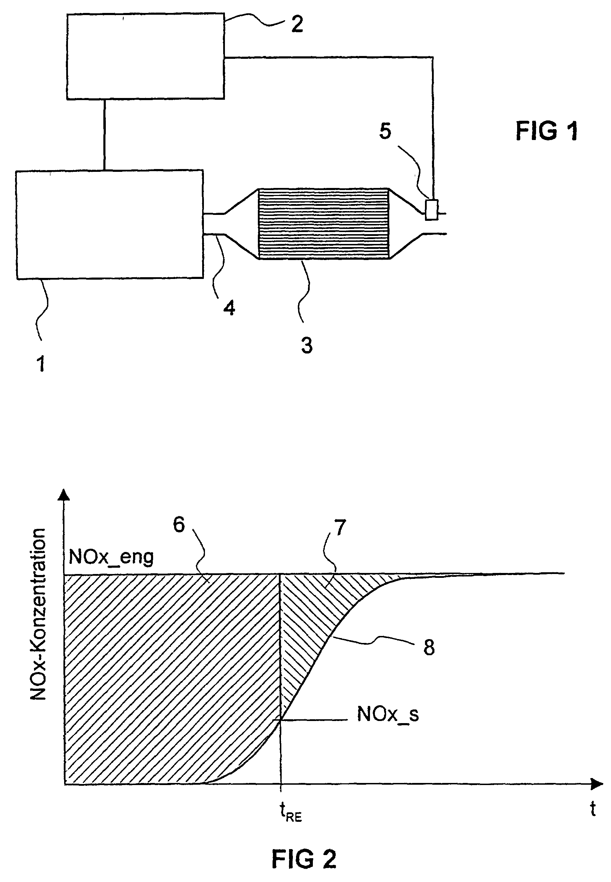

Das erfindungsgemäße Verfahren dient zum Betrieb des Abgasnachbehandlungssystems einer mit Luftüberschuß betriebenen Brennkraftmaschine, wie sie schematisch in Fig. 1 dargestellt ist. Dabei sind nur die Teile und Komponenten in der Figur enthalten, die für das Verständnis der Erfindung notwendig sind. Der mit Luftüberschuß erfolgende, d.h. magere Betrieb der Brennkraftmaschine 1 wird von einem Betriebssteuergerät 2 geregelt. Im Abgastrakt 4 der Brennkraftmaschine 1 befindet sich ein NOx-Speicherkatalysator 3. Stromab dieses NOx-Speicherkatalysators ist ein Meßaufnehmer 5 vorgesehen, dessen Signal vom Betriebssteuergerät 2 eingelesen wird. Der Meßaufnehmer 5 kann unterschiedlich ausgebildet sein. Der Meßaufnehmer 5 kann die NOx-Konzentration oder ein von der Sauerstoff-Konzentration abhängiges Signal anzeigen. In der folgenden Ausführungsform wird ein von der SauerstoffKonzentration abhängiges Signal verwendet, es handelt sich beim Meßaufnehmer 5 also um eine binäre Lambda-Sonde, jedoch ist auch eine Breitband-Lambda-Sonde oder ein beliebiger anderer, den Sauerstoffgehalt anzeigender Meßaufnehmer möglich.

Das Verfahren zum Betrieb des NOx-Speicherkatalysators 3 definiert eine NOx-Nutzspeicherkapazität, zu der folgendes anzumerken ist:

Man kann annehmen, daß die Speicherpartikel, die NOx-Verbindungen adsorbieren, im NOx-Speicherkatalysator 3 über das gesamte Volumen verteilt sind. Daraus folgt, daß einige Speicherpartikel vom Abgasstrom und den darin enthaltenen NOx-Verbindungen leicht erreicht" werden können, während andere Speicherpartikel erst bei bestimmten lokalen Konzentrationsgradienten oder nach bestimmter Zeit von NOx-Verbindungen erreicht werden. Man kann deshalb weiter annehmen, daß die Speicherpartikel an der Oberfläche zuerst NOx-Verbindungen adsorbieren, und erst danach in der Tiefe des Volumens eine Adsorbierung stattfindet. Da die Adsorption in der Tiefe des Volumens aufgrund der längeren Diffusionswege längere Zeit benötigt, wird der Einspeicherwirkungsgrad des NOx-Speicherkatalysators 3 nach einer gewissen Zeit abfallen, wenn alle Speicherpartikel an der Oberfläche NOx-Verbindungen adsorbiert haben.

Ein umgekehrter Prozeß findet bei der Regeneration des NOx-Speicherkatalysators 3 statt. Dort werden zuerst die Speicherpartikel an der Oberfläche regeneriert, d.h. sie geben ihre adsorbierten NOx-Verbindungen zuerst ab. Erst dann werden die NOx-Verbindungen aus der Tiefe gelöst. Dabei kann es jedoch auftreten, daß Regenerationsmittel durchbricht, da nicht die volle Regenerationsmittelmenge umgesetzt werden kann, weil die Speicherpartikel an der Oberfläche des Volumens bereits desorbiert wurden. Dieser Regenerationsmitteldurchbruch zeigt an, daß alle Speicherpartikel an der Oberfläche regeneriert sind.

Physikalisch kann man natürlich keine scharfe Trennung zwischen Oberfläche und Tiefe vornehmen, da das Adsorbieren eine kontinuierlicher Prozeß ist. Auch ist die Einspeichertiefe nicht über die Längsachse des NOx-Speicherkatalysators 3 konstant; während in stromab gelegenen Bereichen Speicherpartikel an der Oberfläche noch nicht vollständig mit NOx-Verbindungen gesättigt sind, wird in den stromauf gelegenen Bereichen des NOx-Speicherkatalysators 3 bereits eine Adsorption an Speicherpartikeln in der Tiefe des Volumens vorgenommen.

Dieses Verhalten des NOx-Speicherkatalysators 3 kann man in einem Einspeichertest nachvollziehen. Dabei wird ein geeignet vorkonditionierter, d.h. regenerierter NOx-Speicherkatalysator 3 solange mit NOx-Konzentration beaufschlagt, bis keine Adsorption mehr stattfindet. Hält man während dieses Tests die dem NOx-Speicherkatalysator zugeführte NOx-Konzentration NOx_eng konstant, wird man am Ausgang eine zeitabhängige Veränderung der NOx-Konzentration feststellen. Diese zeitabhängige Veränderung ist in Kurve 8 der Fig. 2 dargestellt. Die Sättigungskonzentration (NOx-Konzentration am Ausgang nach vollständiger Beladung) entspricht dabei in der Regel nicht der NOx-Konzentration, mit der der Speicherkatalysator 3 beaufschlagt wird; sie wird in der Regel geringer sein, da der Speicherkatalysator ein gewisses NOx-Konvertierungspotential zeigt, das auch bei Sättigung noch eine bestimmte NOx-Reduzierung bewirkt. Zur Vereinfachung ist in Fig. 2 die Sättigungskonzentration gleich NOx_eng. Integriert man den Unterschied zwischen NOx-Konzentration stromauf und stromab des NOx-Speicherkatalysators 3, erhält man nach geeigneter Multiplikation mit dem Abgasmassenstrom die eingespeicherte NOx-Masse.

Diese Masse entspricht der gesamten schraffierten Fläche in Fig. 2. Diese Fläche bzw. die Kurve 8 kann man nun in zwei unterschiedliche Bereiche unterteilen: ein erster Bereich mit einer NOx-Konzentration unter einem Schwellenwert NOx_s und ein zweiter Bereich mit bis zur Sättigungskonzentration ansteigender NOx-Konzentration. Die Sättigungskonzentration ist dabei natürlich die NOx-Konzentration, mit der der NOx-Speicherkatalysator 3 beaufschlagt wird, also NOx_eng. Die Grenze dieser beiden Bereiche, die in Fig. 2 zum Zeitpunkt t_{RE} gelegt wird, ist durch Überschreiten einer definierten NOx-Konzentration gegeben. Im Beispiel der Fig. 2 ist die NOx-Konzentration NOx_s.

Durch geeignete Wahl von NOx_s kann man erreichen, daß die der Fläche 6 entsprechende NOx-Masse der Menge an NOx-Verbindungen entspricht, die bis zum Sättigen der Oberfläche des NOx-Speicherkatalysators 3 einspeicherbar ist.

Überwacht man nun im Betrieb des NOx-Speicherkatalysators 3 die NOx-Konzentration stromab des NOx-Speicherkatalysators 3, und beendet die Speicherphase bei Überschreiten des Schwellenwertes NOx_s, so kann man davon ausgehen, daß alle Speicherpartikel des NOx-Speicherkatalysators mit NOx-Verbindungen belegt sind. Diese Überwachung kann durch ein Modell oder einen geeigneten Meßaufnehmer erfolgen.

Nun kann man die NOx-Konzentration stromab des NOx-Speicherkatalysators mitunter nicht (so genau) messen, um den Zeitpunkt t_{RE} zu bestimmen. In Abgasanlagen ohne stromabwärts angeordneten NOx-Sensor kann man z.B. die NOx-Konzentration stromab des NOx-Speicherkatalysators nicht direkt messen. In dieser Ausführungsform wird deshalb mittels bekannter Modellierung der NOx-Speicherkatalysator über diese Grenze hinaus beladen und anstelle der NOx-Konzentration stromab des NOx-Speicherkatlysators 3 der Sauerstoffgehalt mittels einer Lambda-Sonde als Meßaufnehmer 5 erfaßt.

Diese Lambda-Sonde erlaubt es dann, die Regenerationsmittelmenge, die während einer Regenerationsphase dem NOx-Speicherkatalysator zugeführt wird, zu bestimmen. Während der Regenerationsphase wird die Brennkraftmaschine 1 mit fettem Gemisch betrieben. Zu Beginn der Regenerationsphase zeigt der Meßaufnehmer 5 dennoch leicht mageres bis stöchiometrisches Gemisch an. Dieser Zustand hält länger als die Gaslaufzeit ist. Erst nach einer bestimmten Zeitdauer springt das Signal des Meßaufnehmers 5 zur Anzeige einer fetten Abgaszusammensetzung. Dieser Sprung zeigt an, daß genau die Oberfläche des NOx-Speicherkatalysators regeneriert wurde. Die bis zu diesem Sprung zugeführte Regenerationsmittelmenge ist also ein Maß für die Fläche 6 bzw. die eingespeicherte NOx-Masse. Da jeder NOx-Speicherkatalysator allerdings auch eine bestimmte Menge Sauerstoff adsorbiert, muß von der aus der Regenerationsmittelmenge bestimmten Gesamtspeichermasse noch zuvor die Sauerstoffmenge abgezogen werden, die der NOx-Speicherkatalysator 3 gespeichert hatte. Nach dieser Differenzbildung hat man die NOx-Nutzspeicherkapazität bestimmt.

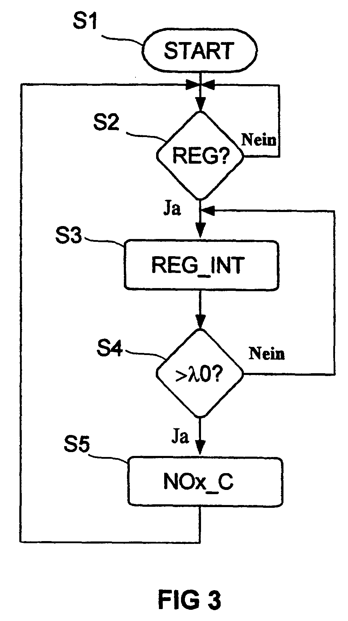

Der Betrieb des NOx-Speicherkatalysators wird somit nach folgendem Verfahren durchgeführt, das in Fig. 3 als Flußdiagramm noch einmal dargestellt ist. Nach Start der Brennkraftmaschine bzw. des Verfahrens in Schritt S1 wird in Schritt S2 zuerst überprüft, ob eine Regenerationsphase eingeleitet werden soll. Dazu wird die Beladung des NOx-Speicherkatalysators 3 bekanntermaßen durch Modellrechnungen nachgebildet. Zur Bestimmung dieses Beladungsgrades wird ein bei der letztmaligen Durchführung des Verfahrens oder in einem Kennfeld abgelegter Wert einer Speicherkapazität des NOx-Speicherkatalysators 3 verwendet. Es muß dabei lediglich sichergestellt werden, daß eine zu Adaptionszwecken heranzuziehende Speicherphase erst dann durch Einleiten einer Regenerationsphase beendet wird, wenn der NOx-Speicherkatalysator 3 über eine bei der letztmaligen Durchführung des Verfahrens bestimmte NOx-Nutzspeicherkapazität hinaus beladen wurde.

Wurde eine Regenerationsphase angefordert, wird mit Schritt S3 fortgefahren. Dabei wird während der Regenerationsphase die Regenerationsmittelmenge, die dem NOx-Speicherkatalysator 3 zugeführt wird, zu einer Regenerationsmittelmenge REG_INT aufintegriert. Nach jedem Integrationsschritt wird im nächsten Block S4 abgefragt, ob die Abgaskomponentenkonzentration stromab des NOx-Speicherkatalysators 3 einen Schwellenwert unterschreitet, da der Sauerstoffgehalt am Regenerationsende fällt. In der hier beschriebenen Ausführungsform handelt es sich dabei um einen Lambda-Wert λ0. Liegt die aus dem Signal des Meßaufnehmers 5 folgende Konzentration über diesem Schwellenwert, wird mit der Integration in Schritt S3 fortgefahren. Wird der Schwellenwert unterschritten, wird die Regeneration beendet und der zuletzt ermittelte Wert REG_INT abgespeichert.

Aus dieser Regenerationsmittelmenge wird dann in Schritt S5 die NOx-Nutzspeicherkapazität NOx_C ermittelt. Dazu wird zuerst die Regenerationsmittelmenge REG_INT in eine Gesamtspeichermenge umgesetzt; dies kann beispielsweise mittels eines Kennfeldes geschehen, das den bekannten Zusammenhang zwischen Regenerationsmittelmenge und Gesamtspeichermenge wiedergibt. Diese Gesamtspeichermenge ist die in der vorhergehenden Speicherphase eingespeicherte Menge aus Sauerstoff und NOx-Verbindungen. Da man davon ausgehen kann, daß Sauerstoff immer bis zur maximal einspeicherbaren Sauerstoffmasse, also bis zum Erreichen der Sauerstoffkapazität eingespeichert wurde, kann man durch Subtraktion der in einem Kennfeld hinterlegten Sauerstoffspeicherkapazität von der Gesamtspeichermenge die NOx-Nutzspeicherkapazität NOx_C ermitteln; die Sauerstoffspeicherkapazität eines NOx-Speicherkatalysators ist in der Regel bereits kurz nach Beginn einer Speicherphase vollständig erreicht.

Die so ermittelte NOx-Nutzspeicherkapazität NOx_C stellt eine gemessene NOx-Speicherkapazität dar, mittels der eine modellbasierte Beladungssimulation des NOx-Speicherkatalysators 3 in Speicherphasen einfacher möglich ist, in einer bevorzugten Ausführung dadurch, daß bei der Berechnung des Beladungsgrades die modellierte Speicherkapazität durch eine gemessene Speicherkapazität ersetzt wird und dadurch lediglich die Absolut-Beladung modelliert werden muß.

Schließlich ist es auch möglich, eine Modellierung der NOx-Speicherkapazität, wie sie im Verfahren der EP 0 597 106 A1 vorgenommen wird, durch die beschriebene Messung der NOx-Nutzspeicherkapazität zu überprüfen. Dazu muß man in einer Speicherphase den NOx-Speicherkatalysator 3 lediglich genau bis an die NOx-Nutzspeicherkapazität NOx_C, oder knapp darüber beladen, und den in der nächsten Regenerationsphase ermittelten NOx_C mit dem modellierten Wert vergleichen; dies ermöglicht einen Abgleich des Modells.

Die Messung der NOx-Nutzspeicherkapazität NOx_C ermöglicht es darüber hinaus, eine unzulässige Verschlechterung des NOx-Speicherkatalysators 3 diagnostizieren zu können, wenn NOx_C unter einen vorbestimmten Schwellenwert sinkt.

## Patentansprüche

1. Verfahren zur Steuerung des Betriebs eines NOx-Speicherkatalysators, der im Abgastrakt einer mager betreibbaren Brennkraftmaschine angeordnet ist, bei welchem Verfahren
a) die Brennkraftmaschine in Speicherphasen mit einem mageren Kraftstoff/Luft-Gemisch betrieben wird, wodurch der NOx-Speicherkatalysator NOx speichert,
b) die Brennkraftmaschine vorübergehend in Regenerationsphasen mit einem fetten Kraftstoff/Luft-Gemisch betrieben wird, wodurch dem NOx-Speicherkatalysator Reduktionsmittel zugeführt wird, so daß dieser gespeichertes NOx katalytisch umsetzt,
c) eine Abgaskomponentenkonzentration stromab des NOx-Speicherkatalysator gemessen wird,
d) die Regenerationsphase abhängig von der Abgaskomponentenkonzentration beendet wird,
e) die Regenerationsmittelmenge bestimmt wird, die während der Regenerationsphase zugeführt wird, bis die Abgaskomponentenkonzentration einen Schwellenwert unterschreitet,
f) aus der Reduktionsmittelmenge eine Gesamtspeichermenge ermittelt wird, die der NOx-Speicherkatalysator gespeichert hatte,
g) von der Gesamtspeichermenge eine aus einer bestimmten Sauerstoffspeicherkapazität des NOx-Speicherkatalysators ermittelte Sauerstoffspeichermenge abgezogen wird, so daß eine NOx-Speichermenge erhalten wird, die einer NOx-Nutzspeicherkapazität entspricht, und
h) diese NOx-Nutzspeicherkapazität zum weiteren Betrieb des NOx-Speicherkatalysators verwendet wird.

2. Verfahren nach Anspruch 1, **dadurch gekennzeichnet, daß** es wiederholt durchgeführt und die Regenerationsphase in Schritt c) dann eingeleitet wird, wenn der NOx-Speicherkatalysator über die NOx-Nutzspeicherkapazität hinaus beladen wurde.

3. Verfahren nach einem der vorhergehenden Ansprüche, **dadurch gekennzeichnet, daß** ein defekter NOx-Speicherkatalysator diagnostiziert wird, wenn die NOx-Nutzspeicherkapazität einen Mindestwert unterschreitet.

4. Verfahren nach einem der vorhergehenden Ansprüche, **dadurch gekennzeichnet, daß** in Schritt g) die Sauerstoffspeicherkapazität einem über Betriebsparametern aufgespannten Kennfeld entnommen wird.

5. Verfahren nach einem der vorhergehenden Ansprüche, **dadurch gekennzeichnet, daß** in Schritt e) ein betriebsparameterabhängige Reduktionsmittelmassenstrom aufintegriert wird, um die Reduktionsmittelmenge zu bestimmen.

6. Verfahren nach einem der vorhergehenden Ansprüche, **dadurch gekennzeichnet, daß** das Einspeicherverhalten des NOx-Speicherkatalysators modelliert und anhand der NOx-Nutzspeicherkapazität abgeglichen wird.

7. Verfahren nach einem der vorhergehenden Ansprüche, **dadurch gekennzeichnet, daß** die gemessene Abgaskomponentenkonzentration der Sauerstoffgehalt ist.

## Claims

1. Method for controlling the operation of an NOx storage catalyst located in the exhaust gas path of a combustion engine which can be operated with a lean mixture, which method involves
a) the combustion engine being operated during storage phases with a lean fuel/air mixture, by which NOx is stored in the NOx storage catalyst,
b) during regeneration phases the combustion engine is temporarily operated with a rich fuel/air mixture, by which the NOx storage catalyst is fed with a reducing agent, so that it converts the stored NOx catalytically,
c) the concentration of an exhaust gas component is measured downstream from the NOx storage catalyst,
d) the regeneration phase is terminated depending on the concentration of the exhaust gas component,
e) the quantity of the regenerative agent, fed in during the regeneration phase up to the point when the concentration of the exhaust gas component falls below a threshold value, is determined,
f) from this quantity of reducing agent, a total stored quantity is determined, being what the NOx storage catalyst had stored,
g) from the total stored quantity is deducted a quantity of oxygen, determined from a defined oxygen storage capacity of the NOx storage catalyst, to give a stored quantity of NOx, which represents a usable NOx storage capacity, and
h) this usable NOx storage capacity is used for the subsequent operation of the NOx storage catalyst.

2. Method in accordance with claim 1, **characterized in that** it is performed repeatedly, and the regeneration phase in step c) is initiated when the NOx storage catalyst has been charged up to above the usable NOx storage capacity.

3. Method in accordance with one of the preceding claims, **characterized in that** an NOx storage catalyst is diagnosed as defective if the usable NOx storage capacity drops below a minimum value.

4. Method in accordance with one of the preceding claims, **characterized in that** in step g) the oxygen storage capacity is taken from an engine characteristics map limited by operating parameters.

5. Method in accordance with one of the preceding claims, **characterized in that** in step e) the mass flow of reducing agent, which depends on the operating parameters, is integrated up to determine the amount of reducing agent.

6. Method in accordance with one of the preceding claims, **characterized in that** the storage characteristics of the NOx storage catalyst are modelled and adjusted by reference to the usable NOx storage capacity.

7. Method in accordance with one of the preceding claims, **characterized in that** the concentration of the exhaust gas component which is measured is the oxygen content.

## Revendications

1. Procédé pour la commande du fonctionnement d'un catalyseur d'accumulation de NOx, disposé dans la ligne d'échappement d'un moteur à combustion interne exploitable dans un régime pauvre, dans lequel
a) le moteur à combustion interne est exploité dans des phases d'accumulation avec un mélange carburant/air pauvre, pendant lesquelles le catalyseur d'accumulation de NOx accumule du NOx,
b) le moteur à combustion interne est exploité temporairement dans des phases de régénération avec un mélange carburant/air riche, pendant lesquelles des réducteurs sont envoyés au catalyseur d'accumulation de NOx, de façon que celui-ci transforme de façon catalytique les NOx accumulés,
c) une concentration des composants de gaz d'échappement est mesurée en aval du catalyseur d'accumulation de NOx,
d) la phase de régénération est accomplie en fonction de la concentration des composants de gaz d'échappement,
e) la quantité des produits de régénération, qui est envoyée pendant la phase de régénération jusqu'à ce que la concentration des composants de gaz d'échappement descend en dessous d'un seuil, est déterminée,
f) une quantité globale d'accumulation, qui a été accumulée par le catalyseur d'accumulation de NOx, est établie à partir de la quantité de réducteur,
g) une quantité d'accumulation d'oxygène, établie à partir d'une certaine capacité d'accumulation d'oxygène du catalyseur d'accumulation de NOx, est soustraite de la quantité globale d'accumulation, de telle façon qu'une quantité d'accumulation de NOx est obtenue, qui correspond à une capacité d'accumulation de NOx disponible, et
h) cette capacité d'accumulation de NOx disponible est utilisée pour le fonctionnement suivant du catalyseur d'accumulation de NOx.

2. Procédé selon la revendication 1, **caractérisé en ce qu'**il est conduit de façon répétitive et que la phase de régénération de l'étape c) est mise en oeuvre quand le catalyseur d'accumulation de NOx a été chargé au-delà de sa capacité d'accumulation de NOx disponible.

3. Procédé selon l'une quelconque des revendications précédentes, **caractérisé en ce qu'**un catalyseur d'accumulation de NOx défectueux est diagnostiqué, quand la capacité d'accumulation de NOx disponible est inférieure à une valeur minimum.

4. Procédé selon l'une quelconque des revendications précédentes, caractérisé en ce dans l'étape g) la capacité d'accumulation d'oxygène est déterminée à partir d'un diagramme caractéristique, établi à partir de paramètres de fonctionnement.

5. Procédé selon l'une quelconque des revendications précédentes, **caractérisé en ce que** dans l'étape e) un flux massique de réducteurs, dépendant de paramètres de fonctionnement, est intégré pour déterminer la quantité de réducteur:

6. Procédé selon l'une quelconque des revendications précédentes, **caractérisé en ce que** le comportement d'accumulation du catalyseur d'accumulation de NOx est modélisé et ajusté grâce à la capacité d'accumulation de NOx disponible.

7. Procédé selon l'une quelconque des revendications précédentes, **caractérisé en ce que** la concentration des composants de gaz d'échappement mesurée est le contenu en oxygène.
